# FASCICULE DE BREVET EUROPEEN

(11) **EP 3 350 482 B1**
(45) Date de publication et mention de la délivrance du brevet: **05.06.2019**
(21) Numéro de dépôt: 16775281.5
(22) Date de dépôt: 08.09.2016
(51) Int. Cl.: F16H 57/04, F02K 3/04, F02C 7/36

(54) **DISPOSITIF D'ALIMENTATION EN HUILE POUR UN REDUCTEUR A TRAIN EPICYCLOÏDAL**
ÖLVERSORGUNGSVORRICHTUNG FÜR EIN EPIZYKLISCHES UNTERSETZUNGSGETRIEBE
OIL SUPPLY DEVICE FOR AN EPICYCLIC REDUCTION GEAR SET

(30) Priorité: 15.09.2015 FR 1558616
(43) Date de publication de la demande: 25.07.2018
(73) Titulaire: Safran Transmission Systems, 92700 Colombes (FR)
(72) Inventeur: GEDIN, Patrice, 77550 Moissy-cramayel (FR); FERAUD, Benjamin, 77550 Moissy-cramayel (FR)
(74) Mandataire: Gevers & Orès
(86) Numéro de dépôt international: PCT/FR2016/052238
(87) Numéro de publication internationale: WO 2017/046481

(56) Documents cités:
- WO-A1-2010/092263
- WO-A1-2015/019025
- US-A1- 2013 225 353

## Description

### Domaine technique :

Le domaine de la présente invention est celui des turbomachines et plus particulièrement celui des systèmes de transmission différentielle dans ces turbomachines, notamment les réducteurs à train épicycloïdal.

### Etat de l'art :

L'art antérieur de la présente invention comprend le document WO-A1-2015/019025.
Les turbomachines actuelles, notamment les turbomachines comportant une ou plusieurs hélices soufflant un flux secondaire, comprennent un système de transmission, appelé réducteur, pour entraîner cette ou ces hélices à la bonne vitesse de rotation à partir de l'arbre de la turbine de puissance du corps primaire du moteur.

Le fonctionnement des réducteurs, en particulier sur des turbomachines avec hélice de soufflante à fort taux de dilution, nécessite un débit d'huile particulièrement important, de l'ordre de 6000 à 7000 litres par heure au décollage, pour assurer la lubrification et le refroidissement de leurs pignons et paliers.

Parmi les réducteurs utilisés, on trouve les réducteurs à train épicycloïdal qui ont l'avantage d'offrir des taux de réduction importants de la vitesse de rotation dans des encombrements réduits. En revanche, ils présentent l'inconvénient d'avoir des pignons de satellites qui se déplacent en tournant autour de l'axe de rotation de l'arbre d'entraînement du réducteur. Ils nécessitent donc des dispositifs permettant de transférer l'huile issue d'un réservoir et d'une pompe situés dans un repère fixe vers des moyens de lubrification qui suivent le déplacement en rotation des pignons de satellites autour de l'arbre d'entraînement. Pour résoudre ce problème, les dispositifs couramment utilisés comprennent des systèmes de joints tournants.

Ces systèmes ont pour inconvénients un encombrement conséquent et une usure qui est peu compatible des durées de vie exigées pour les moteurs aéronautiques, ce qui impacte la maintenance desdits moteurs. Enfin, ces réducteurs sont difficilement compatibles avec un montage souple de la structure de la turbomachine, préconisé par exemple pour palier un problème de perte ou de rupture d'une pale de l'hélice de soufflante, ou encore avec un montage de type modulaire, pour faciliter l'assemblage du moteur.

Dans le but de remédier à ces inconvénients, la demanderesse a déjà proposé, dans les demandes WO-A1-2010/092263 et FR-A1-2987416, des dispositifs de lubrification sans joints tournants, où un injecteur fait gicler l'huile provenant du circuit du repère fixe vers une coupelle solidaire d'un porte-satellites, qui est en rotation autour de l'injecteur et confine l'huile récupérée par centrifugation avant de la diriger vers les moyens de lubrification des pignons.

Ces dispositifs améliorent ainsi fortement la fiabilité du système de lubrification du réducteur ainsi que sa maintenance. Par ailleurs, la solution technique décrite dans la demande WO-A1-2010/092263 permet d'ajuster le débit d'huile allant vers différents engrenages en fonction de leurs besoins en lubrification. Pour cela, la coupelle de réception est segmentée en tronçons suivant l'axe de rotation et des gicleurs séparés sur l'injecteur alimentent ces tronçons. L'huile récupérée par chaque tronçon axial est ensuite dirigée vers un circuit dédié à un type d'engrenage.

Cette solution ne permet cependant pas de moduler la répartition du débit d'huile entre les tronçons en fonction du régime de la turbomachine. De plus, elle est relativement complexe avec des gicleurs dédiés à chaque tronçon axial sur l'injecteur. Par ailleurs, la multiplication du nombre de gicleurs peut poser des questions de fiabilité.

L'invention a pour but de pallier à ces inconvénients, tout en maintenant voire améliorant les avantages des solutions techniques proposées dans les demandes précitées.

### Présentation de l'invention:

L'invention concerne à cet effet une coupelle destinée à alimenter en huile au moins deux circuits de distribution d'huile liés à un porte-satellites d'un réducteur à train épicycloïdal, ledit porte-satellites étant en rotation et l'huile provenant d'un moyen d'éjection de l'huile fixe, ladite coupelle étant agencée pour être solidaire dudit porte-satellites et ayant une forme sensiblement cylindrique en étant ouverte radialement vers l'intérieur par rapport à un axe, caractérisée en ce qu'elle est divisée en une succession circonférentielle de cuvettes séparées et agencées chacune pour communiquer avec l'un desdits circuits de distribution d'huile.

Autrement dit, des séparations circonférentielles sont placées entre les cuvettes qui se succèdent sur la circonférence de la coupelle. Le fait de séparer la coupelle en une succession circonférentielle de cuvettes associées aux différents circuits de distribution d'huile permet de répartir les débits entre ces circuits en jouant sur l'extension circonférentielle des cuvettes. Cela offre une alternative économique aux solutions précédentes car la coupelle peut s'adapter à un unique injecteur, qui n'a pas besoin d'être conçu pour répartir les débits. Cela augmente également la fiabilité du système en simplifiant l'injecteur. De plus, on retrouve des avantages de fiabilité en séparant les cuvettes entre les circuits de distribution d'huile, le mauvais fonctionnement de l'un n'affectant pas les autres.

De préférence, les cuvettes communiquent avec lesdits circuits de distribution d'huile par un fond les délimitant radialement vers l'extérieur.

Avantageusement, ladite succession circonférentielle de cuvettes comporte au moins deux séries alternées circonférentiellement de cuvettes, définies par des extensions circonférentielles des cuvettes différentes entre chaque série.

Cette conception assure une bonne mise en rotation du lubrifiant à l'aide des parois de séparation de ces cuvettes et donc la création d'une pression centrifuge alimentant les circuits de distribution d'huile.

Cette conception répartit le lubrifiant reçu par la coupelle entre les différents circuits de distribution d'huile. Elle permet en particulier d'optimiser le débit d'huile en fonction des besoins, au moins pour un régime de fonctionnement, donc de minimiser la masse d'huile présente dans la turbomachine.

De préférence, lesdites cuvettes sont séparées circonférentiellement par des séparations circonférentielles et délimitées axialement de part et d'autre par des parois transversales de ladite coupelle, chacune des parois transversales ayant un bord périphérique interne transversal sensiblement circulaire et la séparation circonférentielle entre deux cuvettes successives comportant un bord radial interne plus éloigné de l'axe que lesdits bords périphériques internes transversaux, de manière à favoriser un débordement circonférentiel de l'huile retenue par centrifugation dans une cuvette.

D'une part, cela augmente la fiabilité et minimise la consommation d'huile à prévoir pour le cas d'un mauvais fonctionnement des circuits d'huile car, en cas de débordement accidentel d'une cuvette, l'huile est d'abord récupérée par les autres cuvettes. D'autre part, cela permet, en ajustant le rayon de bords des parois de séparation circonférentielle, donc de leur hauteur par rapport au fond, de définir une deuxième répartition du débit d'huile entre les circuits, par débordement d'une cuvette vers une autre, pour un deuxième mode de fonctionnement par rapport au mode évoqué précédemment.

De préférence, la coupelle présente une forme intérieure de section en U dans un plan radial.

L'invention concerne également un dispositif d'alimentation en huile pour un réducteur à train épicycloïdal comportant une coupelle telle que décrite précédemment, comprenant en outre des circuits de distribution d'huile liés audit porte-satellites du réducteur et communiquant avec lesdites cuvettes, au moins une canalisation fixe d'amenée de l'huile et un moyen d'éjection de l'huile à l'extrémité de ladite au moins une canalisation d'amenée, agencé pour éjecter l'huile dans ladite coupelle.

Notamment un tel dispositif s'adapte à une conception modulaire du réducteur et/ou de la turbomachine, car le rouet et/ou le porte-satellites peuvent être assemblés aux canalisations d'amenée d'huile par translation le long de l'axe.

L'invention concerne également un réducteur comprenant un tel dispositif et une turbomachine le comprenant.

L'invention concerne aussi un procédé d'alimentation en huile d'un tel réducteur dans une turbomachine, comprenant le fait de régler le débit d'huile envoyé vers la coupelle, par le ou les moyens d'éjection de l'huile, de manière à ce que l'huile récupérée dans une cuvette alimente le circuit de distribution d'huile avec lequel cette dernière communique et forme, dans cette cuvette, une poche d'huile maintenue entre des parois de cette dernière, pour au moins un premier régime de fonctionnement de la turbomachine.

De préférence, le procédé comprend le fait de répartir le lubrifiant entre deux circuits de distribution d'huile en fonction de leurs besoins en débit d'huile, pour au moins un premier régime de fonctionnement de la turbomachine, par une extension circonférentielle différenciée des cuvettes communiquant avec lesdits deux circuits distribution d'huile. Avantageusement, les bords radialement intérieurs des parois d'une cuvette définissant une surface d'entrée selon la direction radiale, le rapport des surfaces d'entrée des deux cuvettes est proportionnel au rapport entre les besoins en débit de lubrifiant des deux circuits de distribution d'huile avec lesquels elles communiquent.

Avantageusement, le procédé comprend le fait de régler le débit d'huile envoyé vers la coupelle, par le ou les moyens d'éjection de l'huile, de manière à ce que l'huile récupérée dans une cuvette alimente le circuit de distribution d'huile avec lequel cette dernière communique et forme, pour au moins une cuvette, une poche d'huile s'épanchant circonférentiellement vers une autre cuvette, pour au moins un deuxième régime de fonctionnement de la turbomachine

### Brève description des dessins :

La présente invention sera mieux comprise et d'autres détails, caractéristiques et avantages de la présente invention apparaîtront plus clairement à la lecture de la description qui suit, en référence aux dessins annexés sur lesquels :
La figure 1 représente schématiquement une coupe axiale d'une turbomachine utilisant l'invention.
La figure 2 présente une vue détaillée en coupe d'un réducteur à train épicycloïdal, équipé d'un rouet selon l'invention.
La figure 3 est une vue éclatée, en perspective, du réducteur de la figure 2.
La figure 4 présente une coupe schématique d'un rouet selon l'invention.
Les figures 5a, 5b, 5c représentent un agrandissement d'une partie de la figure 4 en indiquant différent mode de fonctionnement de l'invention.

### Description d'un mode de réalisation de l'invention :

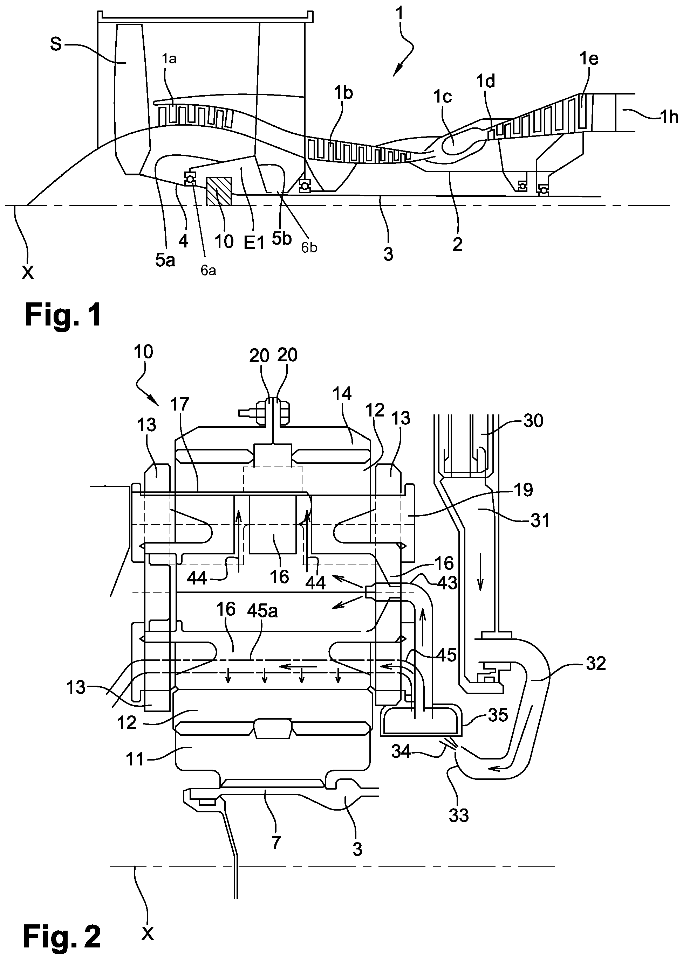

En référence à la figure 1, l'invention concerne, par exemple, une turbomachine 1 qui comporte, de manière classique, une hélice de soufflante S, un compresseur basse pression la, un compresseur haute pression 1b, une turbine haute pression 1d, une turbine basse pression le et une tuyère d'échappement 1h. Le compresseur haute pression 1b et la turbine haute pression 1d sont reliés par un arbre haute pression 2 et forment avec lui un corps haute pression (HP). Le compresseur basse pression la et la turbine basse pression le sont reliés par un arbre basse pression 3 et forment avec lui un corps basse pression (BP).

Dans une configuration concernant l'invention, l'hélice de soufflante S est entraînée par un arbre de soufflante 4 qui est couplé à l'arbre BP 3 au moyen d'un réducteur 10 à train épicycloïdal représenté ici schématiquement.

Le réducteur 10 est positionné dans la partie avant de la turbomachine. Une structure fixe comportant schématiquement, ici, une partie amont 5a et une partie aval 5b est agencée de manière à former un enceinte E1 entourant le réducteur 10. Cette enceinte E1 est ici fermée en amont par des joints au niveau d'un palier 6a permettant la traversée de l'arbre de soufflante 4, et en aval par des joints au niveau de la traversée 6b de l'arbre BP 3.

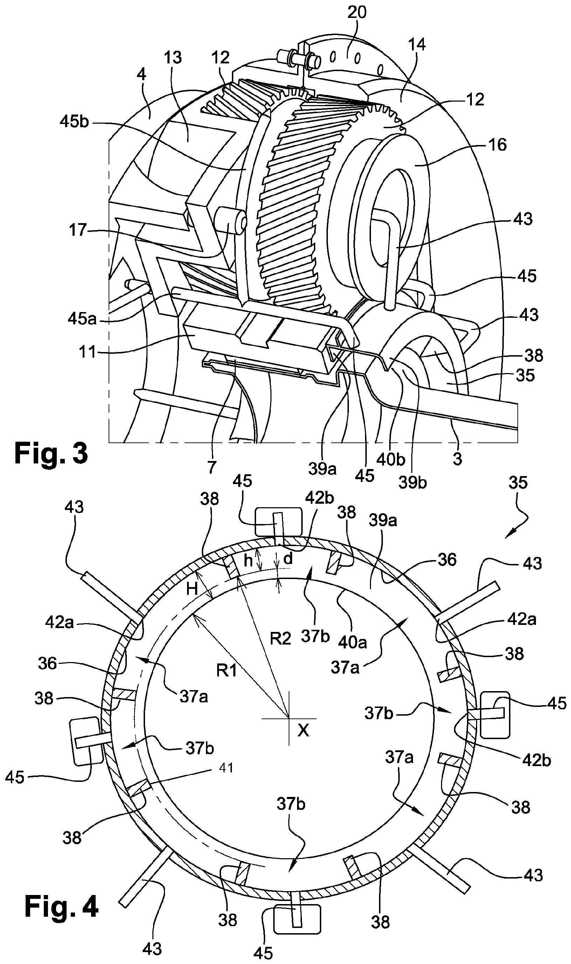

En référence aux figures 2 et 3, le réducteur est enfermé dans une couronne 14 qui est fixée par l'intermédiaire d'un carter de support 20 à ladite structure fixe 5a, 5b avec des moyens souples agencés pour lui permettre de suivre les mouvements éventuels de l'arbre de soufflante 4, dans certains cas de fonctionnement dégradés par exemple. Ces moyens de fixation sont connus de l'homme du métier et ne sont pas détaillés ici. Une brève description peut en être trouvée par exemple dans FR-A1-2987416.

Le réducteur 10 de l'exemple considéré embraye d'un part sur l'arbre BP3 par l'intermédiaire de cannelures 7 qui entraînent un pignon d'engrenage planétaire 11, et d'autre part sur l'arbre de soufflante 4 qui est attaché à un porte-satellites 13. Classiquement, le pignon planétaire 11, dont l'axe de rotation X est confondu avec celui de la turbomachine, entraîne une série de pignons de satellites 12, qui sont répartis régulièrement sur la circonférence du réducteur 10. Le nombre de satellites 12 est généralement défini entre trois et six. Les pignons de satellites 12 tournent aussi autour de l'axe X de la turbomachine, en engrenant sur des dents internes de la couronne 14, qui est montée fixe par rapport à la turbomachine, par l'intermédiaire du carter de support 20. Chacun des satellites 12 tourne librement autour d'un axe de satellite 16 relié au porte-satellite 13, à l'aide d'un palier qui peut être lisse, comme représenté sur la figure 2, ou un palier à éléments roulants (roulements à billes ou à rouleaux).

La rotation des satellites 12 autour de leur axe de satellite 16, du fait de la coopération de leurs pignons avec les dents de la couronne 14, entraîne la rotation du porte-satellites 13 autour de l'axe X, et par conséquent celle de l'arbre de soufflante 4 qui lui est lié, à une vitesse de rotation qui est inférieure à celle de l'arbre BP 3.

L'entraînement de l'arbre de soufflante 4 par le porte-satellites 13 est assuré par une série de doigts de centrage 17, répartis régulièrement sur la circonférence du réducteur 10, qui s'étendent axialement de l'extrémité aval de l'arbre de soufflante 4 et qui s'enfoncent dans des alésages pratiqués dans le porte-satellites 13. Le porte-satellites 13 s'étend symétriquement de part et d'autre des axes de satellite 16 et forme une enceinte dans laquelle pourra être mise en oeuvre une fonction de lubrification des engrenages. Des douilles 19 de fermeture, aux extrémités des axes de satellites 16, permettent de fermer cette enceinte au niveau des paliers des satellites 12.

La figure 2 montre, avec la figure 3, l'acheminement de l'huile vers le réducteur 10 et son cheminement à l'intérieur de celui-ci. Des flèches montrent sur la figure 2 le cheminement suivi par l'huile depuis, sur cet exemple, un réservoir tampon 31 lié à la structure fixe de la turbomachine, jusqu'aux pignons et aux paliers à lubrifier. Le dispositif de lubrification comporte schématiquement trois parties qui vont être décrites ci après successivement, une première partie liée à la structure fixe et délivrant l'huile vers les parties tournantes du réducteur 10, un rouet tournant avec le porte-satellites 13 réceptionnant cette huile, et des circuits de distribution d'huile alimentés en huile par le rouet pour l'acheminer vers les endroits à lubrifier.

La première partie comporte au moins un injecteur 32 dont l'extrémité calibrée est resserrée pour former un gicleur 33. L'huile est amenée vers l'injecteur par une canalisation d'acheminement 30, en provenance du réservoir du moteur (non représenté). Un réservoir tampon 31 peut être interposé à côté du réducteur 10 sur la canalisation, de préférence en partie haute de façon à ce que l'huile puisse s'écouler vers le centre du réducteur par gravité. Le gicleur 33 éjecte l'huile sous la forme d'un jet 34, qui se forme sous la pression produite conjointement par la pompe d'alimentation (non représentée) et par le poids de la colonne d'huile située au-dessus de lui. Le gicleur 33 est positionné ici radialement à l'intérieur du porte-satellites 13 par rapport à l'axe X et le jet 34 est orienté avec une composante radiale dirigée vers l'extérieur du réducteur 10.

En référence aux figures 3 et 4, le rouet de réception de l'huile lié au porte-satellites 13 comporte essentiellement une coupelle cylindrique, ici à section radiale en U, dont l'ouverture en U est orientée en direction de l'axe de rotation X. Le rouet est agencé sur le porte-satellites 13 de manière à ce que le fond 36 du U de la coupelle 35 recueille le jet d'huile 34 éjecté par le gicleur 33.

Selon l'invention, la coupelle 35 du rouet est ici divisée en une succession circonférentielle de cuvettes 37a, 37b séparées par des parois 38 orientées radialement et s'étendant axialement entre les deux parois latérales 39a, 39b du U formé par la coupelle 35. Sur l'exemple présenté, les parois de séparation circonférentielle 38 délimitent deux séries alternées de quatre cuvettes 37a, 37b, avec une extension circonférentielle identique dans une série mais différente d'une série à l'autre.

Par centrifugation, lorsque le rouet tourne avec le porte-satellites 13, l'huile réceptionnée sur le fond 36 de la coupelle 35 est entraînée en rotation et mise en pression entre le fond 36 et les parois latérales 39a, 39b de la coupelle 35. Chaque cuvette 35a, 35b, en passant successivement devant le gicleur 33 au cours de la rotation, recueille une quantité d'huile proportionnelle à son extension circonférentielle. En effet, les bords radialement intérieurs des parois 39a-39b-38 d'une cuvette 37a, 37b définissent une surface d'entrée de la cuvette selon la direction radiale. Cette huile reste confinée entre les parois 38, 39a, 39b de la cuvette 37a, 37b tant que le niveau d'huile par rapport au fond 36 reste inférieur à la hauteur minimale h des parois 38 de celle-ci par rapport au fond 36.

Les bords radiaux internes 40a, 40b des parois latérales 39a, 39b sont sensiblement circulaires. Leur rayon R1 définit une profondeur générale H de la coupelle 35 par rapport au fond 36. De préférence, les parois de séparation circonférentielle 38 ont un bord radial interne 41 situé à une distance R2 de l'axe X légèrement supérieure au rayon R1 des bords internes 40a, 40b des parois latérales 39a, 39b. La hauteur h des parois 38 de séparation circonférentielle par rapport au fond 36 des cuvettes 37a, 37b est donc légèrement inférieure à la hauteur H des parois latérales 39a, 39b par rapport à ce même fond 36. Pour l'invention, cette différence de hauteur d peut être faible, il suffit qu'elle permette à l'huile de s'écouler préférentiellement au dessus des parois 38 de séparation circonférentielle au lieu de passer par les bords internes 39a, 39b des parois latérales 40a, 40b, si le niveau d'huile monte dans une cuvette 37a, 37b. Typiquement, pour un réducteur 10 de turbomachine du type de celui présenté ici, une différence de hauteur d de l'ordre de 3 millimètres pourrait suffire.

Par ailleurs le fond 36 de chaque cuvette 37a, 37b comporte une ouverture 42a, 42b qui communique avec une canalisation 43, 45 d'un circuit de distribution d'huile installé sur le porte-satellites 13.

En référence aux figures 2 et 3, les circuits de distribution d'huile sont ici de deux types. Une première série de circuits de distribution d'huile correspond à des premières canalisations 43, qui sont réparties en régulièrement sur la circonférence du réducteur 10 et en nombre égal à celui des satellites 12. Ces canalisations 43 partent radialement de l'ouverture 42a du fond de la première série de cuvettes 37a et pénètrent dans l'enceinte interne de chaque arbre de satellite 16, qui est refermée par le porte-satellites 13. L'huile qui circule dans les premières canalisations 43 pénètre dans la cavité interne de chaque axe de satellite 16 puis passe, du fait de la force centrifuge, dans des canaux de guidage 44, qui traversent ces axes de satellite 16 en étant orientés radialement. Ces canaux 44 débouchent à la périphérie des axes de satellites 16, au niveau des paliers supportant les pignons des satellites 12 et assurent ainsi la lubrification de ces paliers.

La deuxième série de circuits de distribution d'huile comprend des secondes canalisations 45 qui cheminent, depuis les ouvertures 42b du fond des cuvettes 37b de la deuxième série de cuvettes entre les satellites 12 et se divisent en plusieurs canaux 45a, 45b. Les canaux 45a, 45b acheminent l'huile vers les engrenages formés par les pignons des satellites 12 et le pignon planétaire 11, d'une part, et les pignons des satellites 12 et la couronne externe 14, d'autre part. Chaque canal 45a s'étend axialement le long des pignons d'un satellite 12, entre ceux-ci et le planétaire 11, et forme une rampe de lubrification sur toute la largeur des pignons. Le canal 45b, qui alimente l'engrenage entre la couronne 14 et les pignons des satellites 12, projette son huile au centre du cylindre formé par chaque satellite 12. Comme représenté, chaque satellite 12 est réalisé sous la forme de deux pignons parallèles. Leur denture est orientée en diagonale par rapport à l'axe de rotation du satellite 12, de façon à leur donner une fonction de rainures dans lesquelles l'huile est entraînée, depuis le milieu du cylindre jusqu'à sa périphérie, pour lubrifier l'engrenage sur toute sa largeur.

Sur cet exemple, les premiers circuits de distribution d'huile 43-44 qui lubrifient les paliers supportant les satellites ont besoin d'acheminer un débit d'huile plus important que les deuxièmes circuits 45-45a-45b. Pour cette raison, l'extension circonférentielle des cuvettes 37a de la première série, qui leur correspondent, est plus importante que celle des cuvettes 37b de la deuxième série. Ici, un rapport de deux tiers à un tiers est recherché dans le débit d'huile en fonctionnement nominal ; l'extension circonférentielle des deux séries de cuvettes 37a, 37b reprend sensiblement ce rapport.

L'ensemble a ici été présenté en se référant à une architecture de réducteur 10 à quatre satellites 12 avec des deux séries de circuits de distribution d'huile 43-44, 45-45a-45b de types différents. Pour d'autres architectures de réducteurs, le nombre de cuvettes par série peut être différent. De même le nombre de séries de cuvettes ayant des extensions circonférentielles semblables peut être différent, suivant les types de circuits de distribution d'huile. Par exemple, les deuxièmes circuits de distribution d'huile pourraient être subdivisés en deux, l'un dédié à l'engrenage des pignons des satellites 12 avec le planétaire 11 et l'autre dédié à l'engrenage avec la couronne 14. Dans ce cas, une variante de réalisation du rouet de récupération d'huile est envisageable avec trois séries de cuvettes d'extensions circonférentielles différentes.

On va maintenant décrire plusieurs modes de mise oeuvre du dispositif de lubrification, en relation avec la disposition des cuvettes 37a, 37b dans la coupelle 35.

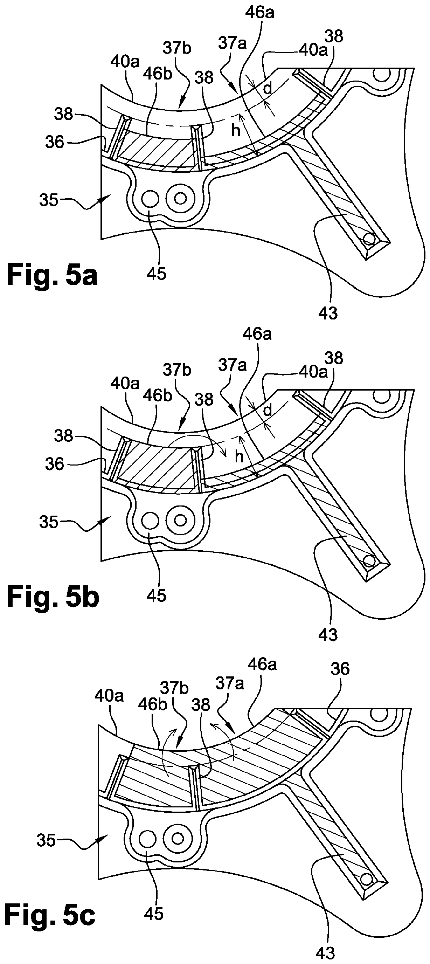

En référence à la figure 5a, dans un premier mode de fonctionnement correspondant à un régime nominal de la turbomachine, par exemple un vol de croisière pour l'aéronef sur lequel elle est installée, un premier débit d'huile est envoyé par le gicleur 33 vers la coupelle 35. Ce débit est réglé de manière à correspondre à la somme des débits utilisés par l'ensemble des circuits de distribution d'huile, représentés sur les figures 5a-5c par les canaux 43, 45 partant de la coupelle 35.

Ici, comme il a été présenté précédemment, les premiers circuits de distribution d'huile 43 nécessitent un débit d'huile supérieur à celui des deuxièmes circuits 45 dans un rapport de deux tiers à un tiers. La coupelle 35 du rouet a donc été conçue de manière à ce que l'extension des cuvettes 37a de la première série soit supérieure à celle des cuvettes 37b de la deuxième série, sensiblement dans le même rapport. Lors du fonctionnement du réducteur 10, chaque cuvette 37a, 37b forme un réservoir tampon pour l'huile entrant dans le circuit de distribution d'huile avec lequel elle communique. Sous l'influence de la pression de centrifugation et en fonction de la loi reliant le débit à la pression de chacun des circuits de distribution d'huile 43, 45, l'huile forme dans chaque cuvette 37a, 37b une poche dont le niveau s'équilibre à une certaine valeur par rapport au fond 38. Sur la figure 5a, comme sur les figures suivantes, le niveau de la poche d'huile présente dans une cuvette 37a, 37b est figuré par un arc de cercle 46a, 46b, séparé du fond 36 par une zone hachurée représentant l'huile.

Le niveau d'huile 46a, 46b n'est pas le même suivant la série de cuvettes 37a, 37b. Ici le niveau d'huile 46b dans les cuvettes 37b de la deuxième série est plus élevé que dans celui 46a dans les cuvettes 37a de la première série pour un même volume d'huile tampon stocké, à cause de leur extension circonférentielle plus faible. Dans la conception du rouet, les parois 38 de séparation circonférentielle des cuvettes 37a, 37b ont été réalisées avec une hauteur h plus élevée que ces niveaux d'huile 46a, 46b. De la sorte, chaque cuvette 37a, 37b remplit sa fonction d'alimentation en huile du circuit de distribution d'huile 43, 45 correspondant, indépendamment des autres cuvettes. Le débit d'huile envoyé par le gicleur 33 se répartit donc entre les circuits de distribution d'huile 43, 45 dans le rapport déterminé en fonction de leurs besoins pour ce premier mode de fonctionnement.

En référence à la figure 5b, dans un deuxième mode de fonctionnement correspondant à un deuxième régime de la turbomachine, par exemple pour le décollage de l'aéronef, les besoins en lubrifiant du réducteur 10 augmentent et, de plus, ils peuvent se répartir différemment entre les circuits de distribution d'huile 43, 45. Pour cela, un deuxième débit d'huile, plus élevé que le premier est envoyé par le gicleur 33 vers la coupelle 35, de manière à correspondre à l'ensemble des besoins des circuits de distribution d'huile 43, 45.

Dans ce cas, le niveau d'huile 46a, 46b dans les cuvettes 37a, 37b monte, notamment celui 46b des cuvettes 37b de la deuxième série, qui avait déjà une valeur plus élevée que celui 46a dans les cuvettes 37a de la première série. La valeur nominale qu'il devrait atteindre est ici une fonction de la loi reliant le débit à la pression dans chaque circuit de distribution d'huile 43, 45. Par ailleurs, lors de la conception du rouet, les parois 38 de séparation circonférentielle entre les cuvettes 37a, 37b ont été réalisées avec une hauteur h inférieure à ladite valeur nominale. De plus, comme il a été dit précédemment, les parois 38 de séparation circonférentielle ont une hauteur h par rapport au fond 36 légèrement plus faible que celle H des parois latérales 39a, 39b. Il s'ensuit, dans ce deuxième mode de fonctionnement, que les cuvettes 37b de la deuxième série débordent vers les cuvettes 37a de la première série mais que l'huile reste confinée dans la coupelle 35 par les parois latérales 39a, 39b. Une conséquence de ce phénomène est que les cuvettes 37a de la première série sont alimentées en huile à la fois directement par l'injecteur 33 et par le débordement des cuvettes 37b de la deuxième série. Le rapport entre le débit d'huile alimentant les premiers circuits de distribution d'huile 43 et celui alimentant les deuxièmes circuits de distribution d'huile 45 augmente donc. Typiquement, un rapport de trois quarts à un quart est obtenu dans l'exemple considéré.

En référence à la figure 5c, si, pour une raison accidentelle le débit envoyé par l'injecteur 33 devient trop important par rapport à celui qui passe par les circuits de distribution d'huile 43, 45 du réducteur 10, le niveau d'huile 46a, 46b dans les cuvettes 37a, 37b atteint les bords radiaux internes 40a, 40b des parois latérales 39a, 39b. L'huile se met alors à déborder de la coupelle 35 par les parois latérales 39a, 39b, comme dans l'art antérieur. Le trop plein d'huile s'échappant de la coupelle 35 est alors récupéré dans l'enceinte E1 entourant le réducteur 10.

Par ailleurs, la situation présentée sur la figure 5b peut également correspondre à un cas dégradé où, ici, un des deuxièmes circuits de distribution d'huile 45 est bouché et n'absorbe pas le débit d'huile nominal. Dans ce cas, la cuvette 37b correspondante déborde dans les cuvettes 37a voisines sans qu'il n'y ait d'huile s'échappant par dessus les parois latérales 39a, 39b.

A l'inverse, dans un cas, non représenté, où l'un des circuits de distribution d'huile ne serait pas réglé correctement et laisse passer plus d'huile que nécessaire, le niveau d'huile de la cuvette correspondante peut baisser mais cela n'affecte pas le fonctionnement des autres cuvettes et la lubrification assurée par les autres circuits.

L'invention a été présentée pour un type de turbomachine et pour un type de réducteur mais l'homme du métier peut aisément la transposer, notamment au cas de réducteurs à train épicycloïdal entraînant deux hélices contrarotatives, dans lequel la couronne extérieure tourne.

## Revendications

1. Coupelle (35) destinée à alimenter en huile au moins deux circuits de distribution d'huile (43-44, 45-45a-45b) liés à un porte-satellites (13) d'un réducteur (10) à train épicycloïdal, ledit porte-satellites (13) étant en rotation et l'huile provenant d'un moyen d'éjection de l'huile (33) fixe, ladite coupelle (35) étant agencée pour être solidaire dudit porte-satellites (13) et ayant une forme sensiblement cylindrique en étant ouverte radialement vers l'intérieur par rapport à un axe (X), **caractérisée en ce qu'**elle est divisée en une succession circonférentielle de cuvettes (37a, 37b) séparées et agencées chacune pour communiquer avec l'un desdits circuits de distribution d'huile (43-44, 45-45a-45b).

2. Coupelle (35) selon la revendication précédente, dans laquelle ladite succession circonférentielle de cuvettes comporte au moins deux séries de cuvettes (37a, 37b) alternées circonférentiellement, définies par des extensions circonférentielles des cuvettes différentes entre chaque série.

3. Coupelle (35) selon l'une des revendications précédentes, dans laquelle lesdites cuvettes (37a, 37b) sont séparées circonférentiellement par des séparations circonférentielles (38) et délimitées axialement de part et d'autre par des parois transversales (39a, 39b) de ladite coupelle (35), chacune des parois transversales (39a, 39b) ayant un bord périphérique interne transversal (40a, 40b) sensiblement circulaire et la séparation circonférentielle (38) entre deux cuvettes successives (37a, 37b) comportant un bord radial interne (41) plus éloigné de l'axe (X) que lesdits bords périphériques internes transversaux (40a, 40b), de manière à favoriser un débordement circonférentiel de l'huile retenue par centrifugation dans une cuvette (37a, 37b).

4. Coupelle (35) selon l'une des revendications précédentes, présentant une forme intérieure de section en U dans un plan radial.

5. Dispositif d'alimentation en huile pour un réducteur (10 à train épicycloïdal comportant une coupelle (35) selon l'une des revendications précédentes, comprenant en outre des circuits de distribution d'huile (43-44, 45-45a-45b) liés audit porte-satellites (13) du réducteur (10) et communiquant avec lesdites cuvettes (37a,, 37b), au moins une canalisation fixe (32) d'amenée de l'huile et un moyen d'éjection de l'huile (33) à l'extrémité de ladite au moins une canalisation d'amenée (32), agencé pour éjecter l'huile dans ladite coupelle (35)

6. Réducteur comprenant un dispositif selon la revendication précédente.

7. Procédé d'alimentation en huile d'un réducteur (10) selon la revendication 6 dans une turbomachine, comprenant le fait de régler le débit d'huile envoyé vers la coupelle (35), par le ou les moyens d'éjection de l'huile (33), de manière à ce que l'huile récupérée dans une cuvette (37a, 37b) alimente le circuit de distribution d'huile (43-44, 45-45a-45b) avec lequel cette dernière communique et forme, dans cette cuvette, une poche d'huile maintenue entre des parois (38-40a-40b) de cette dernière, pour au moins un premier régime de fonctionnement de la turbomachine.

8. Procédé selon la revendication 7, comprenant le fait de répartir le lubrifiant entre deux circuits de distribution d'huile (43-44, 45-45a-45b) en fonction de leurs besoins en débit d'huile, pour au moins un premier régime de fonctionnement de la turbomachine, par une extension circonférentielle différenciée des cuvettes (37a, 37b) communiquant avec lesdits deux circuits de distribution d'huile (43-44, 45-45a-45b).

9. Procédé selon la revendication 7 ou 8, comprenant le fait de régler le débit d'huile envoyé vers la coupelle (35), par le ou les moyens d'éjection de l'huile (33), de manière à ce que l'huile récupérée dans une cuvette (37A, 37b) alimente le circuit de distribution d'huile (43-44, 45-45a-45b) avec lequel cette dernière communique et forme, pour au moins une cuvette (37b), une poche d'huile s'épanchant circonférentiellement vers une autre cuvette (37a), pour au moins un deuxième régime de fonctionnement de la turbomachine.

## Patentansprüche

1. Scheibe (35), die dazu vorgesehen ist, mindestens zwei Ölverteilungskreisläufe (43-44, 45-45a-45b), die mit einem Planetenträger (13) eines epizyklischen Untersetzungsgetriebes (10) verbunden sind, mit Öl zu versorgen, wobei sich der Planetenträger (13) in Drehung befindet und das Öl von einem festen Ölausstoßmittel (33) stammt, wobei die Scheibe (35) angeordnet ist, um mit den Planetenträger (13) fest verbunden zu sein und eine im Wesentlichen zylindrische Form aufweist, wobei sie in Bezug auf eine Achse (X) radial nach innen geöffnet ist, **dadurch gekennzeichnet, dass** sie in eine umfängliche Folge von Wannen (37a, 37b) unterteilt ist, die jeweils getrennt und angeordnet sind, um mit einem der Ölverteilungskreisläufe (43-44, 45-45a-45b) zu kommunizieren.

2. Scheibe (35) nach dem vorstehenden Anspruch, wobei die umfängliche Folge von Wannen mindestens zwei Reihen von umfänglich alternierenden Wannen (37a, 37b) beinhaltet, die durch umfängliche Ausdehnungen der unterschiedlichen Wannen zwischen jeder Reihe definiert sind.

3. Scheibe (35) nach einem der vorstehenden Ansprüche, wobei die Wannen (37a, 37b) umfänglich durch umfängliche Trennungen (38) getrennt und axial beiderseits durch transversale Wände (39a, 39b) der Scheibe (35) abgegrenzt sind, wobei jede der transversalen Wände (39a, 39b) einen transversalen inneren peripheren Rand (40a, 40b) aufweist, der im Wesentlichen kreisförmig ist, und die umfängliche Trennung (38) zwischen zwei aufeinanderfolgenden Wannen (37a, 37b) einen inneren radialen Rand (41) beinhaltet, der weiter entfernt von der Achse (X) ist als die transversalen inneren peripheren Ränder (40a, 40b), sodass ein umfängliches Überlaufen des durch Zentrifugierung in einer Wanne (37a, 37b) zurückgehaltenen Öls begünstigt wird.

4. Scheibe (35) nach einem der vorstehenden Ansprüche, eine innere U-förmige Querschnittsform in einer radialen Ebene präsentierend.

5. Vorrichtung zur Versorgung mit Öl für ein epizyklisches Untersetzungsgetriebe (10), eine Scheibe (35) nach einem der vorstehenden Ansprüche beinhaltend, weiter umfassend Ölverteilungskreisläufe (43-44, 45-45a-45b), die mit dem Planetenträger (13) des Getriebe (10) verbunden sind und mit den Wannen (37a, 37b) kommunizieren, mindestens ein festes Rohr (32) zum Zuführen des Öls und ein Ölausstoßmittel (33) am Ende des mindestens einen Rohrs zum Zuführen (32), angeordnet, um das Öl in die Scheibe (35) auszustoßen.

6. Getriebe, umfassend eine Vorrichtung nach dem vorstehenden Anspruch.

7. Verfahren zur Versorgung mit Öl eines Getriebes (10) nach Anspruch 6 in einer Turbomaschine, umfassend die Tatsache des Regelns des zur Scheibe (35) hin geleiteten Öldurchflusses, durch das oder die Ölausstoßmittel (33), sodass das in einer Wanne (37a, 37b) zurückgewonnene Öl den Ölverteilungskreislauf (43-44, 45-45a-45b) versorgt, mit dem diese Letztere kommuniziert und in dieser Wanne eine Öltasche bildet, die zwischen Wänden (38-40a-40b) dieser Letzteren für mindestens eine erste Betriebsart der Turbomaschine gehalten wird.

8. Verfahren nach Anspruch 7, umfassend die Tatsache des Verteilens des Schmiermittels zwischen zwei Ölverteilungskreisläufen (43-44, 45-45a-45b) in Abhängigkeit von ihrem Öldurchflussbedarf, für mindestens eine erste Betriebsart der Turbomaschine, durch eine differenzierte umfängliche Ausdehnung der Wannen (37a, 37b), die mit den zwei Ölverteilungskreisläufen (43-44, 45-45a-45b) kommunizieren.

9. Verfahren nach Anspruch 7 oder 8, umfassend die Tatsache des Regelns des zur Scheibe (35) hin geleiteten Öldurchflusses, durch das oder die Ölausstoßmittel (33), sodass das in einer Wanne (37A, 37b) zurückgewonnene Öl den Ölverteilungskreislauf (43-44, 45-45a-45b) versorgt, mit dem diese Letztere kommuniziert und für mindestens eine Wanne (37b) eine Öltasche bildet, die sich für mindestens eine zweite Betriebsart der Turbomaschine umfänglich zu einer anderen Wanne (37a) hin ausbreitet.

## Claims

1. Bowl (35) intended to supply oil to at least two oil distribution circuits (43-44, 45-45a-45b) connected to a planet pinion carrier (13) of an epicyclic reduction gear train (10), said planet pinion carrier (13) rotating and the oil coming from a fixed means for oil ejection (33), said bowl (35) being configured to be integral with said planet pinion carrier (13) and having an approximately cylindrical shape, being open radially inwards relative to an axis (X), **characterized in that** it is divided into a circumferential succession of separate cups (37a, 37b) and arranged each to communicate with one of said oil distribution circuits (43-44, 45-45a-45b).

2. Bowl (35) according to the preceding claim, in which said circumferential succession of cups comprises at least two series of cups (37a, 37b) alternating circumferentially, defined by circumferential extensions of the different cups between each series.

3. Bowl (35) according to one of the preceding claims, in which said cups (37a, 37b) are separated circumferentially by circumferential separations (38) and delimited axially on either side by transverse walls (39a, 39b) of said bowl (35), each of the transverse walls (39a, 39b) having an approximately circular transverse internal peripheral edge (40a, 40b) and the circumferential separation (38) between two successive cups (37a, 37b) comprising an inner radial edge (41) farther from the axis (X) than said transverse internal peripheral edges (40a, 40b), so as to promote circumferential overflowing of the oil retained by centrifugation in a cup (37a, 37b).

4. Bowl (35) according to one of the preceding claims, having a U-section internal shape in a radial plane.

5. Oil supply device for an epicyclic reduction gear train (10) comprising a bowl (35) according to one of the preceding claims, further comprising oil distribution circuits (43-44, 45-45a-45b) connected to said planet pinion carrier (13) of the reduction gear (10) and communicating with said cups (37a, 37b), at least one fixed channel (32) for oil feed and a means for oil ejection (33) at the end of said at least one feed channel (32), configured for ejecting the oil in said bowl (35).

6. Reduction gear comprising a device according to the preceding claim.

7. Method for supplying oil to a reduction gear (10) according to claim 6 in a turbine engine, comprising regulating the oil flow rate sent to bowl (35) by the oil ejection means (33), so that the oil recovered from a cup (37a, 37b) supplies the oil distribution circuit (43-44, 45-45a-45b) with which the latter communicates, and forms, in said cup, a pocket of oil maintained between walls (38-40a-40b) of the latter, for at least one first operating mode of the turbine engine.

8. Method according to claim 7, comprising distributing the lubricant between two oil distribution circuits (43-44, 45-45a-45b) as a function of their oil flow needs, for at least one first operating mode of the turbine engine, by a differentiated circumferential extension of the cups (37a, 37b) communicating with said two oil distribution circuits (43-44, 45-45a-45b).

9. Method according to claim 7 or 8, comprising regulating the oil flow sent to the bowl (35) by the oil ejection means (33), so that the oil recovered from a cup (37a, 37b) supplies the oil distribution circuit (43-44, 45-45a-45b) with which the latter communicates, and forms, for at least one cup (37b), a pocket of oil that pours out circumferentially to another cup (37a), for at least one second operating mode of the turbine engine.
